(19)

(11) **EP 4 005 161 B1**

(12) # EUROPÄISCHE PATENTSCHRIFT

(45) Veröffentlichungstag und Bekanntmachung des Hinweises auf die Patenterteilung:
**07.06.2023 Patentblatt 2023/23**

(21) Anmeldenummer: **19783980.6**

(22) Anmeldetag: **19.09.2019**

(51) Internationale Patentklassifikation (IPC):
***H04L 12/403*** *(2006.01)*

(52) Gemeinsame Patentklassifikation (CPC):
**H04L 12/403**

(86) Internationale Anmeldenummer:
**PCT/EP2019/075203**

(87) Internationale Veröffentlichungsnummer:
**WO 2021/052590 (25.03.2021 Gazette 2021/12)**

(54) **VERFAHREN ZUM BETRIEB EINES FUNK-KOMMUNIKATIONSSYSTEMS FÜR EIN INDUSTRIELLES AUTOMATISIERUNGSSYSTEM, FUNK-KOMMUNIKATIONSSYSTEM, BASISSTATION UND TEILNEHMERSTATION**

METHOD FOR OPERATING A RADIO COMMUNICATION SYSTEM FOR AN INDUSTRIAL AUTOMATION SYSTEM, RADIO COMMUNICATION SYSTEM, BASE STATION AND SUBSCRIBER STATION

PROCÉDÉ DE FONCTIONNEMENT D’UN SYSTÈME DE RADIOCOMMUNICATION POUR UN SYSTÈME D’AUTOMATISATION INDUSTRIELLE, SYSTÈME DE RADIOCOMMUNICATION, STATION DE BASE ET STATION D’ABONNÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.06.2022 Patentblatt 2022/22**

(73) Patentinhaber: **Siemens Aktiengesellschaft**
**80333 München (DE)**

(72) Erfinder:
- **SINN, Ulrich**
  **91056 Erlangen (DE)**
- **WEILER, Christoph**
  **75015 Bretten (DE)**

(74) Vertreter: **Siemens Patent Attorneys**
**Postfach 22 16 34**
**80506 München (DE)**

(56) Entgegenhaltungen:
**EP-A1- 1 111 846** **WO-A2-2011/100596**
**GB-A- 2 293 943** **GB-A- 2 508 158**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 005 161 B1

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 1 867 101 B1 ist ein Kommunikationssystem mit einer Basisstation und mehreren Teilnehmerstationen bekannt, bei dem die Teilnehmerstationen nur auf eine Polling-Nachricht, die von der Basisstation an die jeweilige Teilnehmerstation adressiert ist, Nachrichten an die Basisstation senden. Dabei können die Polling-Nachrichten Datenbereiche umfassen, die für andere Teilnehmerstationen als die jeweils adressierte Teilnehmerstation bestimmt sind. Jede Teilnehmerstation liest daher auch Polling-Nachrichten mit, die nicht direkt an sie adressiert sind. Insbesondere sind in den Polling-Nachrichten von den Teilnehmerstationen auszuführende Steuerungsbefehle angegeben. Ist eine Polling-Nachricht direkt an eine empfangende Teilnehmerstation adressiert, führt diese den jeweiligen Steuerungsbefehle aus und sendet eine Bestätigungsnachricht an die Basisstation zurück. Wenn eine Teilnehmerstation dagegen eine Polling-Nachricht empfängt, die nicht direkt an sie adressiert ist, führt sie zwar den für sie vorgesehenen Steuerungsbefehl aus, bestätigt dessen Ausführung aber vorerst noch nicht, sondern erst nach Empfang einer direkt an sie adressierten Polling-Nachricht.

In EP 1 427 150 A2 ist ein Verfahren zum Übermitteln von Multimediadaten über ein WLAN beschrieben, bei dem mittels eines als Point Coordination Function (PCF) bezeichneten Medienzugriffsverfahrens eine Nutzung einer vollständigen Übermittlungsperiode durch WLAN Clients ermöglicht wird. Dabei kann die Übermittlungsperiode für Multimediadaten auf Anforderung hinsichtlich ihrer Länge dynamisch allokiert werden. Dabei ist die Anforderung während eines Zeitintervalls zu übermitteln, während dessen keine Medienzugriffskoordination mittels PCF erfolgt. Die Multimediadaten werden dann während eines Zeitintervalls übermittelt, während dessen eine Medienzugriffskoordination mittels PCF erfolgt.

US 2014/301375 A1 betrifft ein Verfahren zur Berechnung eines Timing-Advance-Werts für ein Funk-Kommunikationssystem. Hierdurch kann ein Kommunikationsgerät Sendezeitpunkte vorverlegen, um einen zuverlässigen Empfang gesendeter Daten durch einen jeweiligen Empfänger sicherzustellen. Zur Berechnung des Timing-Advance-Werts werden zwei Medienzugriffssteuerungsschicht-Nachrichten zwischen Sender und Empfänger ausgetauscht.

Aus WO 2011/100596 A2 ist ein Verfahren zum Optimieren von Direktzugriffskanal-Übertragungen (RACH-Übertragungen) von drahtlosen Sende-/Empfangseinheiten (WTRUs) für mehrfache Übertragungen bekannt. Eine WTRU kann eine Uplink-Übertragung für ein wahlfreies Zugriffsverfahren unter Verwendung einer konfigurierten Zeitressource initiieren, so dass die Uplink-Ressourcen von mehreren WTRUs zeitlich geteilt werden können. Die Übertragungszeit kann absolut oder relativ berechnet werden. Eine Backoff-Zeit kann angewendet werden, bevor die Uplink-Übertragung gestartet wird. Die Backoff-Zeit kann WTRUspezifisch oder WTRU-gruppenspezifisch sein bzw. pro Zugriffsklasse angegeben werden und basierend auf einer Prioritätsbasis bestimmt werden. Auf die Backoff-Zeit kann ein Skalierungsfaktor angewendet werden. Ein konkurrenzfreies Zuordnungsverfahren kann verwendet werden, um die geeignete Ressource zu bestimmen. Die Daten können mit und ohne Präambel übertragen werden. Die WTRUs können maschinenartige Kommunikationsgeräte beinhalten und in Übereinstimmung mit einer Anzahl von Faktoren oder Eigenschaften gruppiert werden.

Da eine Basisstation bei einem Datenaustausch mittels Polling keine Informationen darüber hat, zu welchem Zeitpunkt in einer Teilnehmerstation neue zu sendende Daten vorliegen, können Polling-Zyklus und Sende-Zyklus stark gegenüber einander verschoben sein. Hierdurch werden entsprechende Latenzen verursacht. Im ungünstigsten Fall kann eine Polling-Nachricht in einer Teilnehmerstation kurz vorher eintreffen, bevor zu sendende Daten in der Teilnehmerstation vorliegen. Ein Senden dieser Daten verzögert sich dann um fast einen Polling-Zyklus. Insbesondere bei einer automatischen Wiederholung einer Datenübermittlung nach einem fehlgeschlagenen Übermittlungsversuch, kann es vorkommen, dass auf diese Weise übermittelte Daten älter sind als Daten, die bereits zuvor empfangen worden sind. Damit besteht ein Risiko, dass aktuelle Daten durch veraltete Daten überschrieben werden.

Grundsätzlich könnten obige Probleme gelöst werden, indem der Polling-Zyklus deutlich kürzer als der Sende-Zyklus, innerhalb dessen neue zu sendende Daten vorliegen, gewählt werden. Dies würde jedoch zu einer stark erhöhten Auslastung genutzter Funk-Kanäle und an einem Datenaustausch beteiligter Geräte führen.

Der vorliegenden Erfindung liegt die Aufgabe zugrunde, ein Verfahren zum Betrieb eines Funk-Kommunikationssystems für ein industrielles Automatisierungssystem zu schaffen, das eine latenzarme Datenübermittlung und eine effiziente Nutzung von Systemressourcen ermöglicht, sowie geeignete Vorrichtungen zur Implementierung des Verfahrens anzugeben.

Diese Aufgabe wird erfindungsgemäß durch ein Verfahren mit den in Anspruch 1 angegebenen Merkmalen und durch ein Funk-Kommunikationssystem mit den in Anspruch 13 angegebenen Merkmalen gelöst. Vorteilhafte Weiterbildungen der vorliegenden Erfindung sind in den abhängigen Ansprüchen angegeben.

Das erfindungsgemäße Verfahren ist zum Betrieb eines Funk-Kommunikationssystems vorgesehen, das zumindest eine Basisstation und mehrere Teilnehmerstationen umfasst. Die Basisstation, beispielsweise eine WLAN Access Point, fragt von den Teilnehmerstationen, beispielsweise WLAN Clients, jeweils zu übermittelnde Datagramme zyklisch zu vorgegebenen Übermittlungszeitpunkten ab. Dabei fragt die Basisstation für ausgewählte Teilnehmerstationen oder für jede Teilnehmerstation einzeln die jeweils zu übermittelnden Datagramme zu individuellen Übermittlungszeitpunkten je Teilnehmerstation entsprechend einer durch die Basisstation vorgegebenen Stationsreihenfolge ab. Außerdem gibt die Basisstation für die Teilnehmerstationen innerhalb eines Abfragezyklus die Übermittlungszeitpunkte zum Senden der zu übermittelnden Datagramme vor.

Die Übermittlungszeitpunkte werden erfindungsgemäß jeweils aus einem vorangehenden Übermittlungszeitpunkt zuzüglich einer Abfragezyklusdauer und abzüglich einer Wartezeit ermittelt, während der zumindest ein vor dem vorangehenden Übermittlungszeitpunkt zu übermittelndes Datagramm in der jeweiligen Teilnehmerstation bereits fertig zum Senden vorlag. Zur Ermittlung der Übermittlungszeitpunkte senden die Teilnehmerstationen Informationen über die jeweilige Wartezeit an die Basisstation.

Durch eine Ermittlung einer Verweildauer durch die Teilnehmerstationen zu sendender Daten und eine Übermittlung der Verweildauer an die Basisstation kann ein optimierter Polling-Ablauf ermittelt werden. Insbesondere können die Übermittlungszeitpunkte dabei so gewählt werden, dass hinreichend viel Zeit bleibt, um Übermittlungsfehler auf einer Funk-Strecke durch eine wiederholte Datenübermittlung kompensieren zu können. Außerdem kann bei zyklisch anfallenden bzw. zu sendenden Daten eine Wahrscheinlichkeit dafür reduziert werden, dass einzelne Datenpakete oder Datenrahmen (Frames) fehlen. Zusätzlich ergeben sich mit dem erfindungsgemäßen Verfahren reduzierte Latenzen.

Entsprechend einer bevorzugten Ausgestaltung der vorliegenden Erfindung ermittelt die Basisstation die jeweilige Wartezeit aus einer erfassten minimalen Wartezeit zuzüglich einer konstanten oder fortlaufend erfassten Verzögerungszeit. Auf diese können Ungenauigkeiten bei einer Zeiterfassung oder sonstige technisch bedingte Schwankungen der Wartezeit berücksichtigt werden. Derartige Ungenauigkeiten können sich beispielsweise durch für die Zeiterfassung verwendete Timer oder durch Schwankungen bei einer Durchführung von Schritten des erfindungsgemäßen Verfahrens ergeben. Darüber hinaus wird die o.g. Verzögerungszeit vorteilhafterweise aus über mehrere Abfragezyklen erfassten Wartezeitvarianzen ermittelt.

Die Teilnehmerstationen senden die Informationen über die jeweilige Wartezeit vorzugsweise zusammen mit den zu einem jeweils aktuellen oder nachfolgenden Übermittlungszeitpunkt zu übermittelnden Datagrammen. Alternativ oder zusätzlich hierzu können die Teilnehmerstationen jeweils über mehrere Abfragezyklen eine gemittelte Wartezeit ermitteln. In diesem Fall umfassen die an die Basisstation gesendeten Informationen über die jeweilige Wartezeit die gemittelte Wartezeit. Damit ist es nicht erforderlich, dass die Teilnehmerstationen mit jedem Abfragezyklus Informationen über die jeweilige Wartezeit an die Basisstation senden. Die vereinfacht die Implementierung des erfindungsgemäßen Verfahrens und ermöglicht eine Einsparung von Systemressourcen zu dessen Durchführung. Insbesondere kann vorgesehen sein, dass die Teilnehmerstationen die Informationen über die jeweilige Wartezeit nur auf Anforderung durch die Basisstation senden.

Darüber hinaus können jeweils mehrere Teilnehmerstationen zu einer Stationsgruppe zugeordnet sein. In diesem Fall fragt die Basisstation für Stationsgruppen die jeweils zu übermittelnden Datagramme zu individuellen Übermittlungszeitpunkten je Stationsgruppe entsprechend einer durch die Basisstation vorgegebenen Gruppen- bzw. Stationsreihenfolge ab.

Sind mehrere Teilnehmerstationen zu einer Stationsgruppe zugeordnet, wird für ein Abfragen und Senden der jeweils zu übermittelnden Datagramme je Teilnehmerstation, die einer Stationsgruppe zugeordnet ist, vorteilhafterweise ein individueller Funk-Kanal verwendet, der von einem der jeweiligen Stationsgruppe zugeordneten Kanalbündel umfasst ist. Dabei ermittelt die Basisstation die jeweilige Wartezeit für jede Stationsgruppe vorzugsweise aus einer erfassten minimalen Wartezeit innerhalb der Stationsgruppe zuzüglich der Verzögerungszeit.

Die Teilnehmerstationen können beispielsweise untereinander nicht synchronisiert sein. In diesem Fall werden eine Stationsreihenfolge und die Übermittlungszeitpunkte fortlaufend entsprechend den je Abfragezyklus erfassten Wartezeiten festgelegt. Entsprechend einer anderen bzw. weiteren Ausgestaltung der vorliegenden Erfindung sind an ausgewählte Teilnehmerstationen jeweils mehrere End- bzw. Feldgeräte angeschlossen. Von den an dieselbe Teilnehmerstation angeschlossenen End- bzw. Feldgeräten jeweils zu übermittelnde Datagramme werden vorteilhafterweise als Summendatagramme an die Basisstation gesendet. Dabei entspricht die Wartezeit bei Summendatagrammen einer Zeitdauer, während der zumindest ein vor dem vorangehenden Übermittlungszeitpunkt zu übermittelndes Summendatagramm in der jeweiligen Teilnehmerstation bereits fertig zum Senden vorlag.

Das erfindungsgemäße Funk-Kommunikationssystem ist zur Durchführung eines Verfahrens entsprechend vorangehenden Ausführungen vorgesehen und umfasst zumindest eine Basisstation und mehrere Teilnehmerstationen. Die Basisstation ist dafür ausgestaltet und eingerichtet, von den Teilnehmerstationen jeweils zu übermittelnde Datagramme zyklisch zu vorgegebenen Übermittlungszeitpunkten abzufragen. Außerdem ist die Basisstation dafür ausgestaltet und eingerichtet, für die Teilnehmerstationen innerhalb eines Abfragezyklus die Übermittlungszeitpunkte zum Senden der zu übermittelnden Datagramme vorzugeben. Dabei entsprechen die Übermittlungszeitpunkte jeweils einem vorangehenden Übermittlungszeitpunkt zuzüglich einer Abfragezyklusdauer und abzüglich einer Wartezeit, während der zumindest ein vor dem vorangehenden Übermittlungszeitpunkt zu übermittelndes Datagramm in der jeweiligen Teilnehmerstation bereits fertig zum Senden vorlag. Die Teilnehmerstationen sind dafür ausgestaltet und eingerichtet, Informationen über die jeweilige Wartezeit zur Ermittlung der Übermittlungszeitpunkte an die Basisstation zu senden.

Die vorliegende Erfindung wird nachfolgend an einem Ausführungsbeispiel anhand der Zeichnung näher erläutert. Es zeigt

Figur 1 Funk-Kommunikationssystem für ein industrielles Automatisierungssystem mit einem WLAN Access Point und mehreren WLAN Clients,

Figur 2 einen Zeitverlauf für eine Datenübermittlung von den WLAN Clients zum WLAN Access Point ohne optimiertes Polling,

Figur 3 einen Zeitverlauf für eine Datenübermittlung von den WLAN Clients zum WLAN Access Point mit optimiertem Polling.

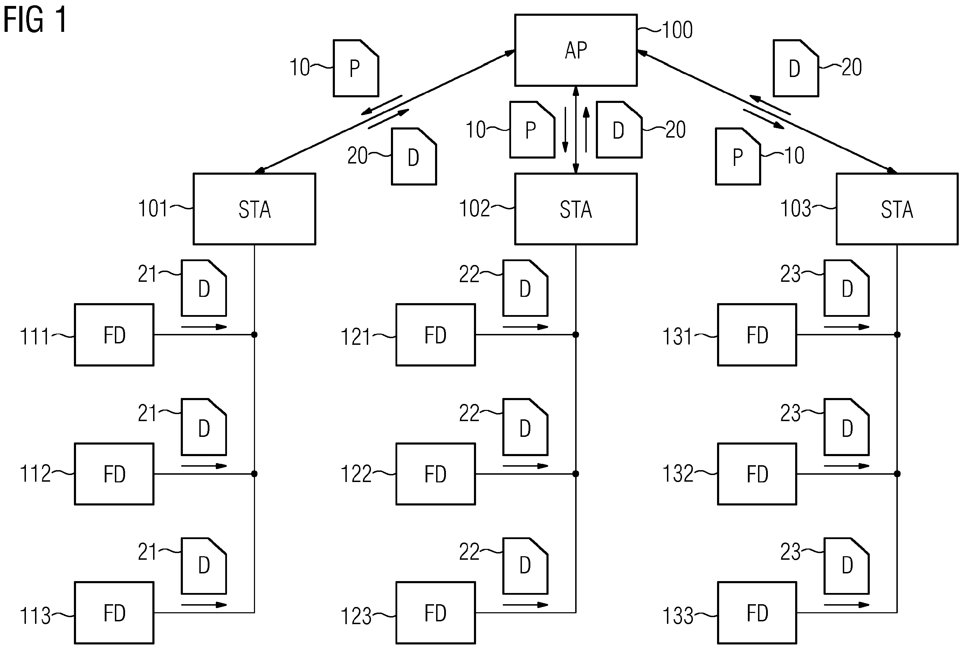

Das in Figur 1 dargestellte Funk-Kommunikationssystem umfasst einen WLAN Access Point 100 als Funk-Basisstation und mehrere drahtlos mit diesem verbindbare WLAN Clients 101-103 als Funk-Teilnehmerstationen. An die WLAN Clients 101-103 sind im vorliegenden Ausführungsbeispiel jeweils mehrere Automatisierungs- bzw. Feldgeräte 111-113, 121-123, 131-133 eines industriellen Automatisierungssystems angeschlossen. Zu Automatisierungsgeräten zählen insbesondere speicherprogrammierbaren Steuerungen, Eingabe/Ausgabe-Einheiten (I/O-Module) oder Bedien- und Beobachtungsstationen des industriellen Automatisierungssystems.

Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung und einem mit der speicherprogrammierbaren Steuerung verbundenen Sensor bzw. einer gesteuerten Maschine oder Anlage. Ein Sensor bzw. eine Maschine oder Anlage kann grundsätzlich auch über das Funk-Kommunikationssystem mit einer speicherprogrammierbaren Steuerung verbunden werden. Die Zentraleinheit einer speicherprogrammierbaren Steuerung ist insbesondere für eine Ermittlung geeigneter Steuerungsgrößen aus erfassten Messgrößen vorgesehen. Obige Komponenten einer speicherprogrammierbaren Steuerung können beispielsweise über ein Rückwandbus-System miteinander verbunden werden.

Eine Bedien- und Beobachtungsstation dient insbesondere zur Visualisierung von Prozessdaten bzw. Mess- und Steuerungsgrö-βen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Insbesondere sind der WLAN Access Point 100 einerseits und die WLAN Clients 101-103 andererseits dafür ausgestaltet und eingerichtet, miteinander Datenrahmen 10, 20 auszutauschen. Die Datenrahmen 10, 20 umfassen im vorliegenden Ausführungsbeispiel einerseits Polling-Nachrichten 10 und andererseits mittels der Polling-Nachrichten 10 durch den WLAN Access Point 100 von den WLAN Clients 101-103 abgefragte Steuerungsdaten 20, insbesondere Prozessdaten bzw. Mess- und Steuerungsgrößen, die mit den WLAN Clients 101-103 verbundenen Steuerungen, Aktoren, Sensoren, Maschinen oder Anlagen zugeordnet sind.

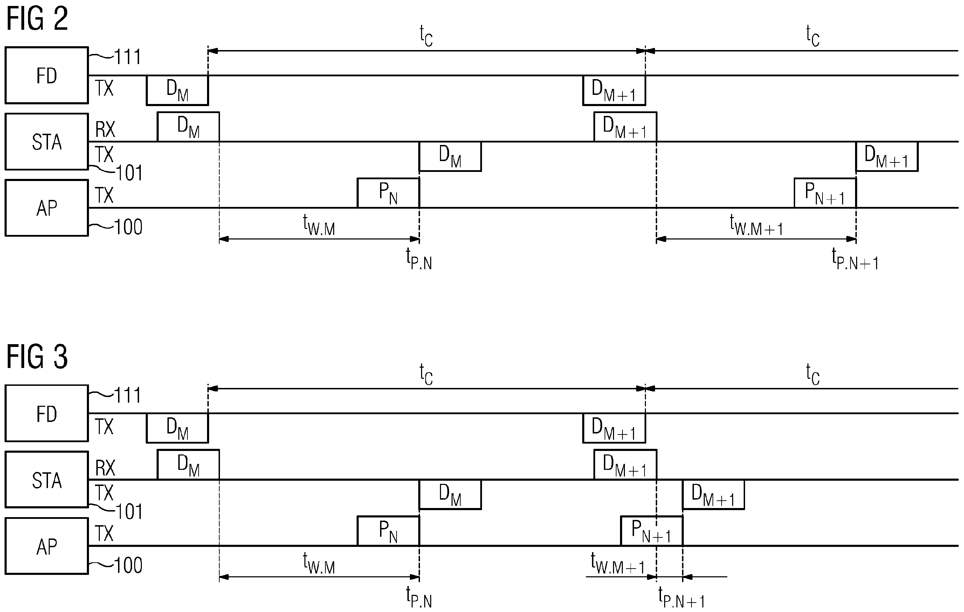

Der WLAN Access Point 100 fragt mittels der Polling-Nachrichten 10, $P_M$, $P_{M+1}$ von den WLAN Clients 101-103 jeweils zu übermittelnde Steuerungsdaten 20, $D_M$, $D_{M+1}$ zyklisch zu vorgegebenen Übermittlungszeitpunkten $t_{P.N}$, $t_{P.N+1}$ ab (siehe auch Figur 2 und 3). Dabei gibt der WLAN Access Point 100 für die WLAN Clients 101-103 innerhalb eines Polling-Zyklus die Übermittlungszeitpunkte $t_{P.N}$, $t_{P.N+1}$ zum Senden der zu übermittelnden Steuerungsdaten 20, $D_M$, $D_{M+1}$ vor. Der Polling-Zyklus entspricht im vorliegenden Ausführungsbeispiel einem Automatisierungszyklus, innerhalb dessen die an die WLAN Clients 101-103 angeschlossenen Automatisierungs- bzw. Feldgeräte 111-113, 121-123, 131-133, FD Steuerungsdaten 20, $D_M$, $D_{M+1}$ bereitstellen.

Im Gegensatz zum in Figur 2 dargestellten Zeitverlauf ohne optimiertes Polling ermittelt der WLAN Access Point 100 die Übermittlungszeitpunkte $t_{P.N}$, $t_{P.N+1}$ im vorliegenden Ausführungsbeispiel entsprechend Figur 3 jeweils aus einem vorangehenden Übermittlungszeitpunkt $t_{P.N-1}$, $t_{P.N}$ zuzüglich einer Polling-Zyklusdauer $t_C$ und abzüglich einer Wartezeit $t_{W.M}$, $t_{W.M+1}$, während der vor dem vorangehenden Übermittlungszeitpunkt $t_{P.N-1}$, $t_{P.N}$ zu übermittelnde Steuerungsdaten 20, $D_M$, $D_{M+1}$ im jeweiligen WLAN Client 101 bereits vollständig fertig zum Senden vorlagen. Insgesamt ergibt sich ein jeweiliger nächster Übermittlungszeitpunkt $t_{P.N+1}$ beim optimierten Polling gemäß Figur 3 entsprechend folgender Gleichung:

$$t_{P.N+1} = t_{P.N} + t_C - t_{W.M}.$$

Zur Ermittlung der Übermittlungszeitpunkte $t_{P.N}$, $t_{P.N+1}$ senden die WLAN Clients 101-103 Informationen über die jeweilige Wartezeit $t_{W.M}$, $t_{W.M+1}$ an den WLAN Access Point 100.

Der WLAN Access Point 100 kann die jeweilige Wartezeit $t_{W.M}$, $t_{W.M+1}$ aus einer erfassten minimalen Wartezeit $t_{W.min}$ zuzüglich entweder einer konstanten oder einer fortlaufend erfassten Verzögerungszeit $t_D$ ermitteln. Vorzugsweise wird die Verzögerungszeit $t_D$ aus über mehrere (x) Polling-Zyklen erfassten Wartezeitvarianzen $t_{W.Jitter}$ ermittelt. Damit ergibt sich der jeweilige nächste Übermittlungszeitpunkt $t_{P.N+1}$ entsprechend folgender Gleichung:

$$t_{P.N+1} = t_{P.N} + t_C - t_{W.min} + t_D$$

mit

$$t_D = x * t_{W.Jitter} \ (x > 0).$$

Im Vergleich zu dem in Figur 2 dargestellten Zeitverlauf für eine Datenübermittlung von den WLAN Clients 101-103 zum WLAN Access Point 100 ergeben sich mit dem optimierten Polling entsprechend Figur 3 deutlich reduzierte Wartezeiten bzw. Latenzen. Darüber hinaus können die WLAN Clients 101-103 die Informationen über die jeweilige Wartezeit $t_{W.M}$, $t_{W.M+1}$ zusammen mit den zu einem jeweils aktuellen Übermittlungszeitpunkt $t_{P.N}$ oder zu einem nachfolgenden Übermittlungszeitpunkt $t_{P.N+1}$ zu übermittelnden Steuerungsdaten $D_M$ bzw. $D_{M+1}$ senden. Ein Senden der Informationen über die jeweilige Wartezeit zusammen mit den zu einem späteren Übermittlungszeitpunkt zu übermittelnden Steuerungsdaten stellt eine Lösung dar, falls die Informationen über die jeweilige Wartezeit aus technischen Gründen nicht mehr einem Datenrahmen mit den zum jeweils aktuellen Übermittlungszeitpunkt zu übermittelnden Steuerungsdaten hinzugefügt werden können. Eine weitere Vereinfachung ergibt sich, wenn die WLAN Clients 101-103 jeweils über mehrere Polling-Zyklen eine gemittelte Wartezeit ermitteln und die an den WLAN Access Point 100 gesendeten Informationen über die jeweilige Wartezeit die gemittelte Wartezeit umfassen. In diesem Fall werden die Informationen über die jeweilige Wartezeit nicht während jedes Polling-Zyklus an den WLAN Access Point 100 übermittelt. Eine noch weitergehende Aufwandsreduktion ist möglich, wenn die WLAN Clients 101-103 die Informationen über die jeweilige Wartezeit nur auf explizite Anforderung durch den WLAN Access Point 100 an diesen senden.

Grundsätzlich kann der WLAN Access Point 100 für ausgewählte WLAN Clients oder für jeden WLAN Client 101-103 einzeln die jeweils zu übermittelnden Steuerungsdaten 20 zu individuellen Übermittlungszeitpunkten $t_{P.N}$ je WLAN Client entsprechend einer durch den WLAN Access Point 100 vorgegebenen Stationsreihenfolge abfragen. Alternativ oder zusätzlich hierzu können jeweils mehrere WLAN Clients zu einer Stationsgruppe zugeordnet sein. In diesem Fall fragt der WLAN Access Point 100 für Stationsgruppen die jeweils zu übermittelnden Steuerungsdaten 20 zu individuellen Übermittlungszeitpunkten $t_{P.N}$ je Stationsgruppe entsprechend einer durch den WLAN Access Point 100 vorgegebenen Gruppen- bzw. Stationsreihenfolge ab.

Bei einer Zuordnung mehrerer WLAN Clients zu einer Stationsgruppe wird für ein Abfragen und Senden der jeweils zu übermittelnden Steuerungsdaten 20 je WLAN Client vorzugsweise ein individueller Funk-Kanal verwendet, der von einem der jeweiligen Stationsgruppe zugeordneten Kanalbündel umfasst ist. Beispielsweise können in WLAN-Systemen entsprechend IEEE 802.11ax mehrere WLAN Clients nach einem Multi User Downlink Trigger Frame (MU-DL) gleichzeitig Daten in einem gemeinsamen Multi User Uplink Frame (MU-UL) senden. Insbesondere kann eine Stationsgruppe entsprechend IEEE 802.11ax je möglicher Kanalbreite, beispielsweise 20 MHz oder 40 MHz, eine maximale Anzahl an WLAN Clients umfassen. Bei einem gruppenweisen Polling ermittelt der WLAN Access Point 100 die jeweilige Wartezeit im vorliegenden Ausführungsbeispiel für jede Stationsgruppe aus einer erfassten minimalen Wartezeit $t_{W.M}$ innerhalb der Stationsgruppe zuzüglich der Verzögerungszeit $t_D$.

Grundsätzlich ist es auch möglich, dass die WLAN Clients 101-103 untereinander nicht synchronisiert sind bzw. sein müssen. In diesem Fall werden die Stationsreihenfolge und die Übermittlungszeitpunkte $t_{P.N}$ fortlaufend entsprechend den je Abfragezyklus erfassten Wartezeiten $t_{W.M}$ festgelegt.

Vorteilhafterweise werden von den an denselben WLAN Client 101-103 angeschlossenen End- bzw. Feldgeräten 111-113, 121-123, 131-133 jeweils zu übermittelnde Datagramme 21-23 als Summendatagramme an den WLAN Access Point 100 gesendet. Dabei entspricht die Wartezeit $t_{W.M}$ bei Summendatagrammen einer Zeitdauer, während der zumindest ein vor dem vorangehenden Übermittlungszeitpunkt zu übermittelndes Summendatagramm im jeweiligen WLAN Client 101-103 bereits fertig zum Senden vorlag.

**Patentansprüche**

**1.** Verfahren zum Betrieb eines Funk-Kommunikationssystems für ein industrielles Automatisierungssystem, bei dem

- das Funk-Kommunikationssystem zumindest eine Basisstation (100) und mehrere Teilnehmerstationen (101-103) umfasst,
- die Basisstation von den Teilnehmerstationen jeweils zu übermittelnde Datagramme (20) zyklisch zu vorgegebenen Übermittlungszeitpunkten ($t_{P.N}$) abfragt,
- die Basisstation für ausgewählte Teilnehmerstationen oder für jede Teilnehmerstation einzeln die jeweils zu übermittelnden Datagramme zu individuellen Übermittlungszeitpunkten je Teilnehmerstation entsprechend einer durch die Basisstation vorgegebenen Stationsreihenfolge abfragt,
- die Basisstation für die Teilnehmerstationen innerhalb eines Abfragezyklus die Übermittlungszeitpunkte ($t_{P.N}$) zum Senden der zu übermittelnden Datagramme vorgibt, wobei die Übermittlungszeitpunkte ($t_{P.N}$) jeweils aus einem vorangehenden Übermittlungszeitpunkt ($t_{P.N-1}$) zuzüglich einer Abfragezyklusdauer ($t_C$) und abzüglich einer Wartezeit ($t_{W.M}$), während der zumindest ein vor dem vorangehenden Übermittlungszeitpunkt zu übermittelndes Datagramm in der jeweiligen Teilnehmerstation bereits fertig zum Senden vorlag, ermittelt werden,
- die Teilnehmerstationen Informationen über die jeweilige Wartezeit zur Ermittlung der Übermittlungszeitpunkte an die Basisstation senden.

**2.** Verfahren nach Anspruch 1, bei dem die Basisstation die jeweilige Wartezeit ($t_{W.M}$) aus einer erfassten minimalen Wartezeit ($t_{W.min}$) zuzüglich einer konstanten oder fortlaufend erfassten Verzögerungszeit ($t_D$) ermittelt.

**3.** Verfahren nach Anspruch 2, bei dem die Verzögerungszeit aus über mehrere Abfragezyklen erfassten Wartezeitvarianzen ermittelt wird.

**4.** Verfahren nach einem der Ansprüche 1 bis 3, bei dem die Teilnehmerstationen die Informationen über die jeweilige Wartezeit zusammen mit den zu einem jeweils aktuellen oder nachfolgenden Übermittlungszeitpunkt zu übermittelnden Datagrammen senden.

**5.** Verfahren nach einem der Ansprüche 1 bis 4, bei dem die Teilnehmerstationen jeweils über mehrere Abfragezyklen eine gemittelte Wartezeit ermitteln und bei dem die an die Basisstation gesendeten Informationen über die jeweilige Wartezeit die gemittelte Wartezeit umfassen.

**6.** Verfahren nach einem der Ansprüche 1 bis 5, bei dem die Teilnehmerstationen die Informationen über die jeweilige Wartezeit nur auf Anforderung durch die Basisstation senden.

**7.** Verfahren nach einem der Ansprüche 1 bis 6, bei dem jeweils mehrere Teilnehmerstationen zu einer Stationsgruppe zugeordnet sind und bei dem die Basisstation für Stationsgruppen die jeweils zu übermittelnden Datagramme zu individuellen Übermittlungszeitpunkten je Stationsgruppe entsprechend einer durch die Basisstation vorgegebenen Gruppen- und/oder Stationsreihenfolge abfragt.

**8.** Verfahren nach Anspruch 7, bei dem für ein Abfragen und Senden der jeweils zu übermittelnden Datagramme je Teilnehmerstation, die einer Stationsgruppe zugeordnet ist, ein individueller Funk-Kanal, der von einem der jeweiligen Stationsgruppe zugeordneten Kanalbündel umfasst ist, verwendet wird.

**9.** Verfahren nach einem der Ansprüche 7 oder 8, bei dem die Basisstation die jeweilige Wartezeit für jede Stationsgruppe aus einer erfassten minimalen Wartezeit innerhalb der Stationsgruppe zuzüglich der Verzögerungszeit ermittelt.

**10.** Verfahren nach einem der Ansprüche 1 bis 9, bei dem die Teilnehmerstationen untereinander nicht synchronisiert sind und bei dem eine Stationsreihenfolge und die Übermittlungszeitpunkte fortlaufend entsprechend den je Abfragezyklus erfassten Wartezeiten festgelegt werden.

**11.** Verfahren nach einem der Ansprüche 1 bis 10, bei dem an ausgewählte Teilnehmerstationen (101-103) jeweils mehrere End- und/oder Feldgeräte (111-113, 121-123, 131-133) angeschlossen sind und bei dem von den an dieselbe Teilnehmerstation angeschlossenen End- und/oder Feldgeräten jeweils zu übermittelnde Datagramme (21-23) als Summendatagramme an die Basisstation gesendet werden, wobei die Wartezeit ($t_{W.M}$) bei Summendatagrammen einer Zeitdauer entspricht, während der zumindest ein vor dem vorangehenden Übermittlungszeitpunkt zu übermittelndes Summendatagramm in der jeweiligen Teilnehmerstation bereits fertig zum Senden vorlag.

**12.** Funk-Kommunikationssystem zur Durchführung eines Verfahrens nach einem der Ansprüche 1 bis 11, wobei

- das Funk-Kommunikationssystem zumindest eine Basisstation und mehrere Teilnehmerstationen umfasst,
- die Basisstation dafür ausgestaltet und eingerichtet ist, von den Teilnehmerstationen jeweils zu übermittelnde Datagramme zyklisch zu vorgegebenen Übermittlungszeitpunkten abzufragen,
- die Basisstation dafür ausgestaltet und eingerichtet ist, für ausgewählte Teilnehmerstationen oder für jede Teilnehmerstation einzeln die jeweils zu übermittelnden Datagramme zu individuellen Übermittlungszeitpunkten je Teilnehmerstation entsprechend einer durch die Basisstation vorgegebenen Stationsreihenfolge abzufragen,
- die Basisstation dafür ausgestaltet und eingerichtet ist, für die Teilnehmerstationen innerhalb eines Abfragezyklus die Übermittlungszeitpunkte zum Senden der zu übermittelnden Datagramme vorzugeben, wobei die Übermittlungszeitpunkte jeweils einem vorangehenden Übermittlungszeitpunkt zuzüglich einer Abfragezyklusdauer und abzüglich einer Wartezeit, während der zumindest ein vor dem vorangehenden Übermittlungszeitpunkt zu übermittelndes Datagramm in der jeweiligen Teilnehmerstation bereits fertig zum Senden vorlag, entsprechen,
- die Teilnehmerstationen dafür ausgestaltet und eingerichtet sind, Informationen über die jeweilige Wartezeit zur Ermittlung der Übermittlungszeitpunkte an die Basisstation zu senden.

## Claims

**1.** Method for operating a radio communication system for an industrial automation system, in which

- the radio communication system comprises at least one base station (100) and multiple subscriber stations (101-103),
- the base station cyclically polls, at predefined transmission times ($t_{P.N}$), for respective datagrams (20) that are to be transmitted by the subscriber stations,
- for selected subscriber stations or for each subscriber station individually, the base station polls for the respective datagrams to be transmitted at individual transmission times for every subscriber station in accordance with a station sequence predefined by the base station,
- within a polling cycle, the base station predefines for the subscriber stations the transmission times ($t_{P.N}$) for transmitting the datagrams to be transmitted, the transmission times ($t_{P.N}$) being ascertained from a respective preceding transmission time ($t_{P.N-1}$) plus a polling cycle period ($t_C$) and minus a waiting period ($t_{W.M}$), during which at least one datagram to be transmitted prior to the preceding transmission time was already present and ready for transmission in the respective subscriber station,
- the subscriber stations transmit information about the respective waiting period to the base station in order to ascertain the transmission times.

**2.** Method according to Claim 1, in which the base station ascertains the respective waiting period ($t_{W.M}$) from a recorded minimum waiting period ($t_{W.min}$) plus a constant or continuously recorded delay ($t_D$).

**3.** Method according to Claim 2, in which the delay is ascertained from waiting period variances recorded over multiple polling cycles.

**4.** Method according to one of Claims 1 to 3, in which the subscriber stations transmit the information about the respective waiting period together with the datagrams to be transmitted at a respective current or subsequent transmission time.

**5.** Method according to one of Claims 1 to 4, in which the subscriber stations ascertain an averaged waiting period over in each case multiple polling cycles and in which the information transmitted to the base station about the respective waiting period comprises the averaged waiting period.

**6.** Method according to one of Claims 1 to 5, in which the subscriber stations transmit the information about the respective waiting period only at the request of the base station.

**7.** Method according to one of Claims 1 to 6, in which in each case multiple subscriber stations are associated to form a station group and in which, for station groups, the base station polls for the respective datagrams to be transmitted at individual transmission times for every station group in accordance with a group and/or station sequence predefined by the base station.

**8.** Method according to Claim 7, in which an individual radio channel that a channel bundle associated with the respective station group comprises is used for polling for and transmitting the respective datagrams to be transmitted for every subscriber station associated with a station group.

**9.** Method according to either of Claims 7 and 8, in which the base station ascertains the respective waiting period for each station group from a recorded minimum waiting period within the station group plus the delay.

**10.** Method according to one of Claims 1 to 9, in which the subscriber stations are not in sync with one another and in which a station sequence and the transmission times are continuously stipulated in accordance with the waiting periods recorded for every polling cycle.

**11.** Method according to one of Claims 1 to 10, in which selected subscriber stations (101-103) each have multiple terminals and/or field devices (111-113, 121-123, 131-133) connected to them and in which respective datagrams (21-23) to be transmitted by the terminals and/or field devices connected to the same subscriber station are transmitted to the base station as summed datagrams, wherein the waiting period ($t_{W.M}$) for summed datagrams corresponds to a period of time during which at least one summed datagram to be transmitted prior to the preceding transmission time was already present and ready for transmission in the respective subscriber station.

**12.** Radio communication system for performing a method according to one of Claims 1 to 11, wherein

- the radio communication system comprises at least one base station and multiple subscriber stations,
- the base station is configured and set up to cyclically poll, at predefined transmission times, for respective datagrams that are to be transmitted by the subscriber stations,
- the base station is configured and set up so as, for selected subscriber stations or for each subscriber station individually, to poll for the respective datagrams to be transmitted at individual transmission times for every subscriber station in accordance with a station sequence predefined by the base station,
- the base station is configured and set up so as, within a polling cycle, to predefine for the subscriber stations the transmission times for transmitting the datagrams to be transmitted, the transmission times corresponding to a respective preceding transmission time plus a polling cycle period and minus a waiting period, during which at least one datagram to be transmitted prior to the preceding transmission time was already present and ready for transmission in the respective subscriber station,
- the subscriber stations are configured and set up to transmit information about the respective waiting period to the base station in order to ascertain the transmission times.

## Revendications

**1.** Procédé pour faire fonctionner un système de radiocommunication d'un système d'automatisation industrielle, dans lequel

- le système de radiocommunication comprend au moins un poste (100) de base et plusieurs postes (101-103) de participants,
- le poste de base demande cycliquement, à des instants ($t_{P.N}$) de transmission donnés à l'avance, des datagrammes (20) à transmettre respectivement par les postes de participants,
- le poste de base demande, pour des postes de participants sélectionnés ou pour chaque poste de participant individuellement, les datagrammes à transmettre respectivement à des instants de transmission individuels par poste de participant correspondant à un ordre de poste donné à l'avance par le poste de base,
- le poste de base prescrit, pour les postes de participants, dans un cycle de demande, les instants ($t_{P.N}$) de transmission pour l'envoi des datagrammes à transmettre, dans lequel on détermine les instants ($t_{P.N}$) de transmission respectivement à partir d'un instant ($t_{P.N-1}$) de transmission précédent additionné d'une durée ($t_C$) de cycle de demande et diminué d'un temps ($t_{W.M}$) d'attente pendant que le au moins un datagramme, à transmettre avant l'instant de transmission précédent, était présent déjà prêt à l'envoi dans le poste de participant respectif,
- les postes de participant envoient au poste de base des informations sur le temps d'attente respectif pour la détermination des instants de transmission.

**2.** Procédé suivant la revendication 1,

dans lequel le poste de base détermine le temps ($t_{W.M}$) d'attente respectif, à partir d'un temps ($t_{W.min}$) d'attente minimum détecté additionné d'un temps ($t_D$) de retard constant ou détecté en continu.

**3.** Procédé suivant la revendication 2, dans lequel on détermine le temps de retard à partir de variances de temps d'attente détectées sur plusieurs cycles de demande.

**4.** Procédé suivant l'une des revendications 1 à 3, dans lequel les postes de participant envoient les informations sur le temps d'attente respectif ensemble avec les datagrammes à transmettre à un instant de transmission respectivement en cours ou suivant.

**5.** Procédé suivant l'une des revendications 1 à 4, dans lequel les postes de participant déterminent respectivement sur plusieurs cycles de demande un temps d'attente en moyenne et dans lequel les informations, envoyées au poste de base, sur le temps d'attente respectif comprennent le temps d'attente en moyenne.

**6.** Procédé suivant l'une des revendications 1 à 5, dans lequel les postes de participant envoient des informations sur le temps d'attente respectif seulement sur demande du poste de base.

**7.** Procédé suivant l'une des revendications 1 à 6, dans lequel plusieurs postes de participant sont affectés à un groupe de postes et dans lequel le poste de base demande, pour des groupes de postes, les datagrammes à transmettre respectivement à des instants de transmission individuels par groupe de poste conformément à un ordre de groupes et/ou de postes donné à l'avance par le poste de base.

**8.** Procédé suivant la revendication 7, dans lequel on utilise, pour une demande et un envoi des datagrammes à transmettre respectivement par poste de participant, qui est affecté à un groupe de postes, un canal radio individuel, qui est compris dans un faisceau de canaux associé au groupe de postes respectif.

**9.** Procédé suivant l'une des revendications 7 ou 8, dans lequel le poste de base détermine le temps d'attente respectif pour chaque groupe de postes à partir d'un temps d'attente minimum détecté dans le groupe de postes additionné du temps de retard.

**10.** Procédé suivant l'une des revendications 1 à 9, dans lequel les postes de participant ne sont pas synchronisés entre eux, et dans lequel on fixe un ordre des postes et les instants de transmission en continu conformément au temps d'attente détectés par cycle de demande.

**11.** Procédé suivant l'une des revendications 1 à 10, dans lequel, à des postes (101-103) de participant sélectionnés sont raccordés respectivement plusieurs terminaux et/ou appareils sur site (111-113, 121-123, 131-133) et dans lequel on envoie au poste de base, par les terminaux et/ou appareils sur site raccordés au même poste de participant respectivement des datagrammes (21-23) à transmettre comme datagrammes sommes, dans lequel le temps ($t_{W.M}$) d'attente correspond, pour des datagrammes sommes, à une durée pendant laquelle au moins un datagramme somme, à transmettre avant l'instant de transmission précédent, était présent en étant déjà prêt à l'envoi dans le poste de participant respectif.

**12.** Système de radiocommunication pour effectuer un procédé suivant l'une des revendications 1 à 11, dans lequel

- le système de radiocommunication comprend au moins un poste de base et plusieurs postes de participant,
- le poste de base est conformé et agencé pour demander cycliquement, à des instants de transmission donnés à l'avance, des datagrammes à transmettre respectivement par les postes de participant,
- le poste de base est conformé et agencé pour demander, pour des postes de participant sélectionnés ou pour chaque poste de participant individuellement, les datagrammes à transmettre respectivement à des instants de transmission individuels par poste de participant conformément à un ordre de poste donné à l'avance par le poste de base,
- le poste de base est conformé et agencé pour prescrire, pour les postes de participant dans un cycle de demande, les instants de transmission pour l'envoi des datagrammes à transmettre, dans lequel les instants de transmission correspondent respectivement à un instant de transmission précédent additionné d'une durée du cycle de demande et diminué d'un temps d'attente, pendant lequel au moins un datagramme, à transmettre avant l'instant de transmission précédent, était présent déjà prêt à l'envoi dans le poste de participant respectif,
- les postes de participant sont conformés et agencés pour envoyer au poste de base des informations sur le temps d'attente respectif pour la détermination des instants de transmission.

FIG 1
AP
100
P
10
D
20
STA
101
STA
102
STA
103
D
21
D
22
D
23
FD
111
112
113
121
122
123
131
132
133

FIG 2
FD
111
TX
STA
RX
TX
101
AP
TX
100
$t_C$
$t_C$
$D_M$
$D_{M+1}$
$D_M$
$D_{M+1}$
$D_M$
$D_{M+1}$
$P_N$
$P_{N+1}$
$t_{W.M}$
$t_{W.M+1}$
$t_{P.N}$
$t_{P.N+1}$
FIG 3
FD
111
TX
STA
RX
TX
101
AP
TX
100
$t_C$
$t_C$
$D_M$
$D_{M+1}$
$D_M$
$D_{M+1}$
$D_M$
$D_{M+1}$
$P_N$
$P_{N+1}$
$t_{W.M}$
$t_{W.M+1}$
$t_{P.N}$
$t_{P.N+1}$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1867101 B1
- EP 1427150 A2
- US 2014301375 A1
- WO 2011100596 A2